# EUROPEAN PATENT SPECIFICATION

(11) **EP 1 272 271 B1**
(45) Date of publication and mention of the grant of the patent: **13.07.2005**
(21) Application number: 01931568.8
(22) Date of filing: 05.04.2001
(51) Int. Cl.: B01J 37/18

(54) **PROCESS FOR ACTIVATING A CATALYST CONTAINING AN S-CONTAINING ADDITIVE**
VERFAHREN ZUM AKTIVIEREN EINES KATALYSATORS DER EIN SCHWEFELENTHALTENDES ADDITIV ENTHÄLT
PROCEDE D'ACTIVATION D'UN CATALYSEUR COMPRENANT UN ADDITIF CONTENANT S

(30) Priority: 11.04.2000 EP 00201294; 26.04.2000 US 199768 P
(43) Date of publication of application: 08.01.2003
(73) Proprietor: Albemarle Netherlands B.V., 3818 LE Amersfoort (NL)
(72) Inventor: EIJSBOUTS, Sonja, NL-5253 BE Nieuwkuijk (NL)
(74) Representative: Schalkwijk, Pieter Cornelis
(86) International application number: PCT/EP2001/003877
(87) International publication number: WO 2001/076738

(56) References cited:
- EP-A- 0 289 211
- WO-A-94/25157
- WO-A-97/17137

## Description

The present invention relates to a process for activating catalysts containing an S-containing organic additive, in particular a hydrotreating catalyst containing an S-containing organic additive.

Hydrotreating catalysts comprise hydrogenation metal components, generally a Group VI metal component such as molybdenum and/or tungsten and a Group VIII metal component, such as nickel and/or cobalt generally on an oxidic carrier. Hydrotreating catalysts containing S-containing organic additives are known in the art.
For example, European patent application 0 300 629 and European patent application No. 0 357 295 describe hydrotreating catalysts comprising a support impregnated with at least one member of molybdenum, tungsten, and/or Group VIII of the Periodic Table, and a mercapto-compound selected from mercaptocarboxylic acids, amino-substituted mercaptanes, di-mercaptanes, and thioacids.
European patent application No. 0 506 206 also describes a hydrotreating catalyst compnsing an S-containing additive selected from the group of bimercaptanes, aminosubstituted mercaptanes, and thiocarboxylic acids. Some of the catalysts described in this reference are activated by a treatment with hydrogen at a temperature from room temperature up to 400°C.
Similar subject-matter is described in European patent application No. 0 338 788, and European patent application No. 0 289 211.
US 4,636,487 describes a hydrotreating catalyst comprising a support and a hydroxymercaptide of one or more metals, which may be the reaction product of a mercaptoalcohol and one or more metal compounds. The catalyst may be activated with hydrogen at a temperature of 66-316°C.

US 5,139,990 describes a hydrotreating catalyst comprising a carrier and hydrogenation metal components which is treated with an aqueous medium comprising a water-soluble or water-miscible S-containing organic additive, followed by drying the resulting catalyst and activating it with hydrogen at a temperature of 100-600°C.
European patent application No. 0 496 592 describes a hydrotreating catalyst comprising a carboxylic acid and an organic sulphur compound which may be a mercaptocarboxylic acid.
WO 94/25157 is directed to a process for treating spontaneously combustible catalysts. It describes a process in which a catalyst is contacted with elemental sulphur and an oxygen-containing additive having at least 12 carbon atoms. The oxygen-containing additive is used to decrease the self-heating properties of the catalyst and improve sulphur retention.

As indicated above, many of the catalysts containing an S-containing organic additive are activated by being contacted with hydrogen. It has now been found that the activity of these catalysts can be increased if the catalyst is contacted ex situ with an organic liquid prior to with the contacting with hydrogen.

Accordingly, the present invention pertain to a process for activating a catalyst composition comprising at least one hydrogenation metal component of Group VI and/or Group VIII of the Periodic Table, and an S-containing organic additive comprising a mercapto group, wherein the catalyst is contacted *ex situ* with an organic liquid with a boiling range between 100 and 550°C after which the catalyst is contacted with hydrogen at a temperature between room temperature and 600°C.

### The addition of the organic liquid

In the process according to the invention, an additive-containing catalyst is contacted with an organic liquid prior to the hydrogen treatment.

To achieve a more controllable process the organic liquid is added in the absence of hydrogen prior to the hydrogen treatment.

The organic liquid has a boiling range of 100-550°C, preferably 150-500°C It generally is a petroleum fraction. By their nature, petroleum fractions comprise less than 12 wt.% of oxygen. Petroleum fractions comprising less than 8 wt % of oxygen, preferably less than 5 wt.%, more preferably less than 2 wt.%, specifically less than 0.5 wt.% of oxygen, may be preferred. Although the olefin content of the organic liquid is not critical to the process according to the invention, petroleum fractions with and iodine number of 50 or less, specifically 30 or less, may be preferred. Examples of suitable petroleum fractions include fractions comprising heavy oils, lubricating oil fractions like mineral lube oil (360°C < BP < 500°C), atmospheric gas oils, vacuum gas oils, straight run gas oils (250°C < BP < 350°C), white spirit (180°C < BP < 220°C), middle distillates like diesel, jet fuel and heating oil, naphthas, and gasoline. Preferably white oil, gasoline, diesel, gas oil, or mineral lube oil is used.

The organic liquid appears to ensure that the catalyst is able to withstand the conditions prevailing during the hydrogen treatment, that is, during the contacting of the catalyst with hydrogen. The organic liquid is not particularly intended to bring sulphur into the catalyst, since the catalyst already contains sulphur in the form of the sulphur-containing additive. Nevertheless, petroleum cuts such as a gas oil or diesel may sometimes contain sulphur. Generally, the organic liquid will contain less than 10 wt.% of sulphur, preferably less than 5 wt.%. The amount of sulphur added with the organic liquid will be less than 40%, preferably less than 35% of the total amount of sulphur added to the catalyst with the organic liquid and by way of the sulphur-containing additive already present on the catalyst.

The amount of organic liquid generally is 20-500% of the catalyst pore volume which can be filled with the liquid at issue under the conditions of application of the liquid. The pore volume can easily be determined by slowly adding liquid under said conditions to a certain amount of catalyst in a closed flask while shaking and determining by visual inspection when the liquid is no longer adsorbed. Another method is to add excess liquid and to remove the excess from the catalyst, e.g., by centrifugation. The person skilled in the art of pore volume impregnation is familiar with these procedures. To get the desired effect and avoid waste of material an amount of 50-200%, more in particular 50-125% of the catalyst pore volume, is preferred. Evidently, if excess liquid is present it can easily be removed, e.g., by drying the catalyst.
The way in which the catalyst is contacted with the organic liquid is not critical to the invention as long as it is ensured that each catalyst particle is contacted with the organic liquid. Conventional mixing methods may be applied. The organic liquid is generally contacted with the catalyst particles at a temperature between room temperature and 200°C. Increased temperatures may sometimes be desired because they decrease the viscosity of the liquid. For *ex situ* operation the temperature may preferably be between room temperature and 75°C.

After the incorporation of the organic liquid, the catalyst is contacted with hydrogen at a temperature between room temperature and 600°C, preferably between 100 and 450°C, more preferably between 200 and 400°C. The hydrogen treatment is not intended to introduce sulphur into the catalyst Nevertheless, some S-containing compound, in particular some H₂S. may be present in the hydrogen. It is intended to introduce less than 10% of the stoichiometric sulphur quantity necessary to convert the hydrogenation metals into Co₉S₈, MoS₂, WS₂, and Ni₃S₂, respectively, into the catalyst by way of S-containing compound added to the hydrogen, preferably less than 5%, more preferably in the substantial absence of S-containing compound added to the hydrogen. It is noted that the phrase "S-containing compound added to the hydrogen" is intended to refer to S-containing compound added extraneously to the hydrogen. It does not include S-containing compound, in particular H₂S generated by decomposition of the S-containing organic additive. Recycle of the hydrogen gas may be an attractive option.

The total amount of sulphur-containing compound which is incorporated into the catalyst in the process according to the invention, including the amount of sulphur added by way of the S-containing organic additive and the amount of sulphur added with the organic liquid, if any, is generally selected to correspond to 50-300%, preferably 70-200%, more preferably 80-150%, of the stoichiometric sulphur quantity necessary to convert the hydrogenation metals into Co₉S₈, MoS₂, WS₂, and Ni₃S₂, respectively.

The total pressure during the process according to the invention, more in particular, the pressure during the hydrogen activation step, is not critical It will generally be between atmospheric pressure and 300 bar, depending on where the process is carried out. If the process, in particular the hydrogen activation step is carried out *ex situ,* the pressure may, e.g., be between atmospheric pressure and 10 bar When the hydrogen treatment is carried out *in situ,* the pressure may be much higher, e.g., in the range of 25 to 300 bar.

The contacting in the gaseous phase with hydrogen can be carried out in any suitable manner, including in fixed bed processes and moving bed processes. Since, depending on the nature of the S-containing organic additive, the activation of the catalyst with hydrogen may be exothermic by nature, it may be important that the temperature of the catalyst is well-controlled. Generally, such control is easier in a moving bed process. In the context of the present specification, a moving bed process is intended to encompass all processes in which the catalyst moves relative to the reactor. Examples are ebullated bed processes and processes carried out in a rotary furnace. In the latter case, the contacting can be done either co-currently or counter-currently, with counter-current operation being preferred.

The various steps of the process according to the invention can be carried out *ex situ* or *in situ.* In the context of the present specification, the term *in situ* means in the reactor in which the catalyst will eventually be applied to effect hydrotreating. Conversely, *ex situ* means outside said reactor.
For example, it is possible to effect the contacting with the organic liquid *ex situ* while the contacting with hydrogen is effected *in situ*. It is also possible to effect the complete process *ex situ*.
It is generally preferred to carry out the complete process *ex situ,* because this generates less downtime for the hydrotreating reactor and simplifies the reactor start-up.

If the complete process according to the invention is carried out *ex situ,* it may be desirable to passivate the activated catalyst prepared in this way, since the resulting catalyst is self-heating. Passivation can be done by contacting the catalyst with an oxygen-containing compound under controlled conditions. The use of an oxygen-containing gas, such as air, is a well-known embodiment. Alternatively, the catalyst may be passivated by being contacted with an organic liquid, such as diesel, gas oil, white spirit, or lube oil. Passivation processes are known in the art. See, for example, EP-897 748 and NL 8900914, which describe the use of hydrocarbons, and V.M. Browne, S P A. Louwers, and R. Prins, Catalysis Today volume 10 number 3 pp 345-52 (1991) and S.P.A. Louwers, M.W.J. Craje, C. Geantet, A.M. van der Kraan, and R. Prins, Journal of Catalysis volume 144 number 2 pp. 579-96 (1993), both of which describe the use of oxygen.

### The additive-containing catalyst

In principle, the additive-containing catalyst can be any catalyst which compnses a Group VIB hydrogenation metal component and/or a Group VIII hydrogenation metal component, and an S-containing organic additive, generally on a carrier. Catalysts comprising the combination of a Group VIB hydrogenation metal component and a Group VIII hydrogenation metal component are preferred. As the skilled person will recognise, the metals may be present in any form. When they are incorporated into the catalyst composition they are often in the form of their salts or oxides. After calcination they are converted partly or wholly into their respective oxides. After sulphidation and during use the metals are at least partly present in the sulphidic form.

As Group VIB metals may be mentioned molybdenum, tungsten, and chromium. Group VIII metals include nickel, cobalt, and iron. Catalysts comprising molybdenum and/or tungsten as Group VIB metal component and nickel and/or cobalt as Group VIII metal component are the most common. The catalyst usually has a metal content in the range of 0.1 to 50 wt.% calculated as oxides on the dry weight of the catalyst not containing the additive. The Group VIB metal will frequently be present in an amount of 5-40 wt.%, preferably 15-30 wt.%, calculated as trioxide. The Group VIII metal will frequently be present in an amount of 1-10 wt.%, preferably 2-7 wt.%, calculated as monoxide. The catalyst may also contain other components, such as phosphorus, halogens, and boron. Particularly, the presence of phosphorus in an amount of 1-10 wt.%, calculated as P₂O₅, may be preferred.
The catalyst carrier which is generally present may comprise the conventional oxides, e.g., alumina, silica, silica-alumina, alumina with silica-alumina dispersed therein, silica-coated alumina, magnesia, zirconia, bona, and titania, as well as mixtures of these oxides. As a rule, preference is given to the carrier comprising alumina, silica-alumina, alumina with silica-alumina dispersed therein, or silica-coated alumina. Special preference is given to the carrier consisting essentially of alumina or alumina containing up to 25 wt.% of other components, preferably silica. A carrier comprising a transition alumina, for example an eta, theta, or gamma alumina is preferred within this group, with a gamma-alumina carrier being especially preferred. Additionally, although at present less preferred, the catalyst may contain 0-60 wt.% of zeolite.
The catalyst's pore volume (measured via N₂ adsorption) generally is in the range of 0.25 to 1 ml/g. The specific surface area will generally be in the range of 50 to 400 m²/g (measured using the BET method). Generally, the catalyst will have a median pore diameter in the range of 7-20 nm, as determined by N₂ adsorption. The figures for the pore size distribution and the surface area given above are determined after calcination of the catalyst at 500°C for one hour.
The catalyst is suitably in the form of spheres, pellets, beads, or extrudates. Examples of suitable types of extrudates have been disclosed in the literature (see, int. al., US 4,028,227). Highly suitable are cylindrical particles (which may be hollow or not) as well as symmetrical and asymmetrical polylobed particles (2, 3 or 4 lobes).

The additive present in the catalyst is an S-containing organic additive comprising a mercapto group. In the context of the present specification the term organic refers to an additive comprising at least one carbon atom and at least one hydrogen atom.
Within the group of mercapto-compounds, mercaptocarboxylic acids represented by the general formula HS-R1-COOR, wherein R1 stands for a divalent hydrocarbon group with 1-10 carbon atoms and R stands for a hydrogen atom, an alkali metal, an alkaline earth metal, ammonium, or a linear or branched alkylgroup having 1 to 10 -carbon atoms. Examples include mercaptoacetic acid (HS-CH2-COOH), beta-mercaptoprioprionic acid (HS-CH2CH2-COOH), methylmercaptoacetate (HS-CH2-COOCH3), ethyl 2-mercaptoacetate (HS-CH2-COOC2H5), ethylhexyl mercaptoacetate (HS-CH2-COOC8H17), and methyl 3-mercaptoproprionate ((HS-CH2CH2-COOCH3).
Further compounds preferred within the group of mercapto-compounds include aminosubstituted mercaptanes represented by the general formula H2N-R2-SH, wherein R2 stands for a divalent hydrocarbon group having 1-15 carbon atoms. Examples of these compounds include 2-amino ethanethiol (H2N-CH2CH2-SH), and 4-amino thiophenol (H2N-C6H4-SH).
Additional compounds within the group of mercapto-compounds are the di-mercaptanes represented by the general formula HS-R3-SH, wherein R3 stands for a divalent hydrocarbon group having 1-15 carbon atoms. Examples of these compounds include ethanedithiol (HS-CH2CH2-SH) and 1,4-butanedithiol (HS-(CH2)4-SH).
Preferred compounds also include thioacids of the formula R4-COSH, wherein R4 stands for a monovalent hydrocarbon group having 1-15 carbon atoms Examples of these compounds include thioacetic acid (CH3-COSH) and thiobenzoic acid (C6H5COSH). Dithioacids of the formula HSOC-R5-COSH, wherein R5 is a divalent hydrocarbon group with 1-15 carbon atoms may also be suitable. An example is dithioadipic acid (HSOC-C4H10-COSH).
Preferred compounds also include mercaptoalcohols of the general formula R6S-R5-(OH)n, wherein R5 represents an alkyl group having from 1 to 15 carbon atoms or a phenyl group, R6 represents a hydrogen atom or an alkyl group having 1 or 2 carbon atoms, and n is 1 or 2. Examples of these compounds include 2-mercaptoethanol, 2-(methylthio)ethanol, 2-(ethylthio)ethanol, 3-mercapto-2-butanol, 4-mercaptophenol, 2-(methylthio)phenol, 4-(methylthio)phenol, 2-(ethylthio)phenol, 3-mercapto-1,2,-propanediol, 3-methylthio-1,2, propanediol, and 3-ethylthio-1,2, propanediol.

At this point in time the mercaptocarboxylic acids are considered preferred for reasons of catalyst activity. Other compounds, in particularly those which are soluble in or miscible with water may be preferred for environmental reasons (less smell and no organic solvent being necessary).
A single compound as well as a combination of compounds may be used as additive.

The amount of additive present in the additive-containing catalyst depends on the specific situation. It was found that the appropriate amount of additive generally lies in the range of 0.01-2.5 moles of additive per mole of hydrogenation metals present in the catalyst. If the amount of additive added is too low, the advantageous effect associated with its presence will not be obtained. On the other hand, the presence of an exceptionally large amount of additive will not improve its effect. Generally it is intended that the amount of sulphur incorporated into the catalyst by way of the additive is selected to correspond to 5-200%, preferably 50-200%, more preferably 80-150%, of the stoichiometric sulphur quantity necessary to convert the hydrogenation metals into Co₉S₈, MoS₂, WS₂, and Ni₃S₂, respectively.

The way in which the additive is incorporated into the catalyst composition is not critical to the process according to the invention. The additive may be incorporated into the catalyst composition prior to, subsequent to, or simultaneously with the incorporation of the hydrogenation metal components.
For example, the additive can be incorporated into the catalyst composition prior to the hydrogenation metal components by being added to the carrier before the hydrogenation metal components are. This can be done by mixing the additive with the carrier material before it is shaped, or by impregnating the shaped carrier material with the additive. This embodiment is not preferred at this point in time.
Alternatively, the additive can be incorporated into the catalyst composition simultaneously with the hydrogenation metal components. This can be done, e.g., by mixing the additive and the hydrogenation metal components with the carrier material before shaping or by impregnating the carrier with an impregnation solution comprising the hydrogenation metal components and the additive, followed by drying under such conditions that at least part of the additive is maintained in the catalyst.
It is also possible to incorporate the additive into the catalyst composition subsequent to the hydrogenation metal components. This can be done, e.g , by first incorporating the hydrogenation metal components into the catalyst composition, e.g., by mixing them with the carrier material or by impregnating the carrier with them, optionally followed by drying and/or calcining, and subsequently incorporating the additive, e.g., by impregnation, optionally followed by drying under such conditions that at least part of the additive is maintained in the catalyst.
Depending on the nature of the additive and the way in which it is incorporated into the catalyst composition, the additive may be used in solid form, in liquid form, or dissolved in a suitable solvent. It may be preferred for the additive to be incorporated into the catalyst dissolved in water.

### Use of the activated catalyst prepared according to the invention

The catalyst activated by the process according to the invention can be used in the hydrotreating of hydrocarbon feeds. The hydrotreating generally takes place under conventional hydrotreating conditions, such as temperatures in the range of 250-450°C, pressures in the range of 5-250 bar, space velocities in the range of 0,1-10 h⁻¹, and H₂/oil ratios in the range of 50-2000 NI/I. Examples of suitable feeds include middle distillates, kerosine, naphtha, vacuum gas oils, heavy gas oils and residues. Preferably, the hydrocarbon feed contains at least 0.2 wt% of sulphur, calculated as atomic sulphur S. Examples of suitable hydrotreating reactions are (deep) hydrodesulphurisation, hydrodenitrogenation, hydrodearomatisation, and hydrodemetallisation. (Deep) hydrodesulphurisation, hydrodenitrogenation, and hydrodearomatisation are preferred.

### Example 1

### Starting material

A conventional hydrotreating catalyst containing 24 wt.% molybdenum, calculated as trioxide, 4 wt.% nickel, calculated as oxide, and 7 wt.% phosphorus, calculated as P₂O₅, on a gamma-alumina carrier was impregnated by pore volume impregnation with a solution of HS-CH₂-COOH in water, containing 1 mole HS-CH₂-COOH per mole of the total of molybdenum and nickel. Then, the catalyst is dried rotating in hot air to a product temperature of about 100°C.

### Comparative activation procedure

The additive-containing starting catalyst catalyst (10 ml) was activated at atmospheric pressure with H₂ (flow = 5 l/hr). The temperature was increased by 0.5°C per minute to 300°C and held at that temperature for 3 hours.

### Activation procedure according to the invention

The additive-containing starting catalyst was pore volume impregnated with SRGO (straight run gas oil) in an amount corresponding to 0.046 g SRGO per gram catalyst. This additive-containing SRGO-impregnated Ni-Mo-P/γ-Al₂O₃ catalyst (10 ml) was activated in the same way as described above.

### Testing

The catalysts were tested in an upflow tubular reactor using a SRGO with the properties given in table 1. The reaction conditions are given in table 2.

**Table 1:**

| feedstock properties | |
|---|---|
| Type feed | Straight run gas oil |
| | |
| Nitrogen (ASTM D-4629) (ppmwt) | 115 |
| Sulphur (ASTM D-4294) (wt.%) | 1.2 |
| Density 15°C (g/ml) | 0.84 |
| | |
| Dist (°C) (ASTM D 1160) | |
| IBP | 121 |
| 5 vol.% | 177 |
| 10 vol. % | 203 |
| 30 vol. % | 254 |
| 50 vol. % | 292 |
| 70 vol. % | 330 |
| 90 vol. % | 386 |
| 95 vol. % | 412 |
| FBP | 476 |

**Table 2:**

| Reaction conditions | |
|---|---|
| Temperature (°C) | 340 |
| Pressure (bar) | 30 |
| H₂/oil (NI/I) | 250 |
| LHSV (h-1) | 1.0 |

The oil product from the reactor was analysed, and the relative volume activities of the catalysts for hydrodesulphurisation, hydrodenitrogenation, and hydrodearomatisation were calculated, with the activity of the starting material activated using the comparative activation procedure being set at 100. The results are given in Table 3 below.

**Table 3:**

| test results | | |
|---|---|---|
| | Comparative activation procedure | Activation procedure according to the invention |
| RVA HDS | 100 | 116 |
| RVA HDN | 100 | 104 |
| RVA HDA | 100 | 110 |

This shows that the activation procedure according to the invention, which includes a catalyst prewetting step, shows an improved activity as compared to the comparative activation procedure.

## Claims

1. A process for activating a catalyst composition comprising at least one hydrogenation metal component of Group VI and/or Group VIII of the Periodic Table, and an S-containing organic additive comprising a mercapto group, wherein the catalyst is contacted *ex situ* with an organic liquid with a boiling range between 100 and 550°C, after which the catalyst is contacted with hydrogen at a temperature between room temperature and 600°C.

2. The process of claim 1 wherein the organic liquid is a hydrocarbon with a boiling range of 150-500°C, preferably white oil, gasoline, diesel, gas oil, or mineral lube oil.

3. The process of either of the preceding claims wherein the amount of organic liquid is 20-500% of the catalyst pore volume.

4. The process of any one of the preceding claims wherein the catalyst particles are contacted with the organic liquid at a temperature between room temperature and 200°C, preferably between room temperature and 75°C.

5. The process of any one of the preceding claims wherein the contacting with the organic liquid takes place in such a manner that each catalyst particle is contacted with the organic liquid.

6. The process of any one of the preceding claims wherein the contacting with hydrogen takes place *ex situ*.

7. The process of claim 6, wherein the catalyst is passivated after the *ex situ* hydrogen treatment.

8. The process according to claim 6 or 7 wherein the *ex situ* contacting with hydrogen is carried out at a temperature between atmospheric pressure and 10 bar.

9. The process according to any one of claims 6-8 wherein the contacting with hydrogen is carried out in a moving bed process such as an ebullating bed process and processes carried out in a rotary furnace.

10. The process of any one of the preceding claims wherein the contacting of the catalyst with hydrogen takes place at a temperature of 100-450°C.

11. The process of any one of the preceding claims wherein the S-containing organic additive is a mercapto acid represented by the general formula HS-R1-COOR, wherein R1 stands for a divalent hydrocarbon group with 1-10 carbon atoms and R stands for a hydrogen atom, an alkali metal, an alkaline earth metal, ammonium, or a linear or branched alkyl group having 1 to 10 carbon atoms.

12. The catalyst obtainable by the process of any of the preceding claims 1-11.

13. Use of the catalyst of claim 12 in the hydrotreating of hydrocarbon feeds.

## Patentansprüche

1. Verfahren zur Aktivierung einer Katalysatorzusammensetzung, die wenigstens eine Hydriermetallkomponente der Gruppe VI und/oder der Gruppe VIII des Periodensystems sowie ein S-haltiges organisches Additiv mit einer Mercaptogruppe umfasst, wobei der Katalysator ex situ mit einer organischen Flüssigkeit mit einem Siedebereich zwischen 100 und 550 °C in Kontakt gebracht wird, woraufhin der Katalysator bei einer Temperatur zwischen Raumtemperatur und 600 °C mit Wasserstoff in Kontakt gebracht wird.

2. Verfahren gemäß Anspruch 1, wobei die organische Flüssigkeit ein Kohlenwasserstoff mit einem Siedebereich von 150-500 °C ist, vorzugsweise Weißöl, Benzin, Dieselöl, Gasöl oder Mineralschmieröl.

3. Verfahren gemäß einem der vorstehenden Ansprüche, wobei die Menge der organischen Flüssigkeit 20-500% des Katalysatorporenvolumens beträgt.

4. Verfahren gemäß einem der vorstehenden Ansprüche, wobei die Katalysatorteilchen bei einer Temperatur zwischen Raumtemperatur und 200 °C, vorzugsweise zwischen Raumtemperatur und 75 °C, mit der organischen Flüssigkeit in Kontakt gebracht werden.

5. Verfahren gemäß einem der vorstehenden Ansprüche, wobei das In-Kontakt-Bringen mit der organischen Flüssigkeit in einer solchen Weise erfolgt, dass jedes Katalysatorteilchen mit der organischen Flüssigkeit in Kontakt gebracht wird.

6. Verfahren gemäß einem der vorstehenden Ansprüche, wobei das In-Kontakt-Bringen mit Wasserstoff ex situ erfolgt.

7. Verfahren gemäß Anspruch 6, wobei der Katalysator nach der ex-situ-Wasserstoffbehandlung passiviert wird.

8. Verfahren gemäß Anspruch 6 oder 7, wobei das ex-situ-In-Kontakt-Bringen mit Wasserstoff bei einem Druck zwischen Atmosphärendruck und 10 bar durchgeführt wird.

9. Verfahren gemäß einem der Ansprüche 6-8, wobei das In-Kontakt-Bringen mit Wasserstoff in einem Verfahren mit beweglichem Bett, wie einem Verfahren mit wallendem Bett und Verfahren, die in einem Rotationsofen durchgeführt werden, durchgeführt wird.

10. Verfahren gemäß einem der vorstehenden Ansprüche, wobei das In-Kontakt-Bringen des Katalysators mit Wasserstoff bei einer Temperatur von 100-450 °C erfolgt.

11. Verfahren gemäß einem der vorstehenden Ansprüche, wobei das S-haltige organische Additiv eine Mercaptosäure ist, die durch die allgemeine Formel HS-R1-COOR dargestellt wird, wobei R1 für eine zweiwertige Kohlenwasserstoffgruppe mit 1-10 Kohlenstoffatomen steht und R für ein Wasserstoffatom, ein Alkalimetall, ein Erdalkalimetall, Ammonium oder eine lineare oder verzweigte Alkylgruppe mit 1 bis 10 Kohlenstoffatomen steht.

12. Katalysator, der nach dem Verfahren gemäß einem der vorstehenden Anspruche 1-11 erhältlich ist.

13. Verwendung des Katalysators gemäß Anspruch 12 beim Hydrotreating von Kohlenwasserstoff-Einsatzmaterialien.

## Revendications

1. Procédé pour activer une composition de catalyseur comprenant au moins un composant métallique d'hydrogénation du groupe VI et/ou du groupe VIII de la classification périodique des éléments, et un additif organique contenant du S comprenant un groupe mercapto, dans lequel le catalyseur est mis en contact *ex situ* avec un liquide organique ayant un intervalle d'ébullition de 100 à 550°C, après quoi le catalyseur est mis en contact avec de l'hydrogène à une température comprise entre la température ambiante et 600°C.

2. Procédé selon la revendication 1, dans lequel le liquide organique est un hydrocarbure ayant un intervalle d'ébullition de 150 à 500° C, de préférence de l'huile blanche, de l'essence, du carburant diesel, du gazole ou de l'huile de graissage minérale.

3. Procédé selon l'une ou l'autre des revendications précédentes, dans lequel la quantité de liquide organique est de 20 à 500% du volume poreux du catalyseur.

4. Procédé selon l'une quelconque des revendications précédentes, dans lequel les grains de catalyseur sont mis en contact avec le liquide organique à une température comprise entre la température ambiante et 200°C, de préférence comprise entre la température ambiante et 75°C.

5. Procédé selon l'une quelconque des revendications précédentes, dans lequel la mise en contact avec le liquide organique se déroule d'une manière telle que chaque grain de catalyseur est mis en contact avec le liquide organique.

6. Procédé selon l'une quelconque des revendications précédentes, dans lequel la mise en contact avec l'hydrogène se déroule *ex situ.*

7. Procédé selon la revendication 6, dans lequel le catalyseur est passivé après le traitement avec l'hydrogène *ex situ*.

8. Procédé selon la revendication 6 ou la revendication 7, dans lequel la mise en contact *ex situ* avec l'hydrogène est effectuée à une température comprise entre la pression atmosphérique et 10 bars.

9. Procédé selon l'une quelconque des revendications 6 à 8, dans lequel la mise en contact avec l'hydrogène est effectuée par un procédé en lit fluidisé tel qu'un procédé en lit bouillonnant et des procédés mis en oeuvre dans un four rotatif.

10. Procédé selon l'une quelconque des revendications précédentes, dans lequel la mise en contact du catalyseur avec l'hydrogène se déroule à une température de 100 à 450°C.

11. Procédé selon l'une quelconque des revendications précédentes, dans lequel l'additif organique contenant du S est un acide mercapto représenté par la formule générale HS-R₁-COOR, dans lequel R₁ représente un groupe hydrocarbure divalent ayant 1 à 10 atomes de carbone et R représente un atome d'hydrogène, un métal alcalin, un métal alcalino-terreux, l'ammonium, ou un groupe alkyle linéaire ou ramifié ayant 1 à 10 atomes de carbone.

12. Catalyseur pouvant être obtenu par le procédé selon l'une quelconque des revendications précédentes 1 à 11.

13. Utilisation du catalyseur selon la revendication 12 dans l'hydrotraitement de charges d' hydrocarbures.
